# EUROPEAN PATENT APPLICATION

(11) **EP 3 923 180 A1**
(43) Date of publication of application: **15.12.2021**
(21) Application number: 21171973.7
(22) Date of filing: 04.05.2021
(51) Int. Cl.: G06K 7/10, G06F 11/07, G06F 11/14

(54) **RETENTION DETERMINATION DEVICE, RETENTION DETERMINATION SYSTEM AND RETENTION DETERMINATION METHOD**

(30) Priority: 12.06.2020 JP 2020102609
(71) Applicant: OMRON Corporation, Shiokoji-dori, Shimogyo-ku, Kyoto-shi Kyoto 600-8530 (JP)
(72) Inventor: NOGAMI, Hidekatsu, Kizugawa-shi, Kyoto, 619-0283 (JP)
(74) Representative: Becker, Eberhard

(57) **Abstract**

Provided is a retention determination device capable of determining a RF tag failure. A second reader/writer device (10B) includes a determination part (13B) that, by collating first data acquired by an upper communication part (11B) from a first reader/writer device (10A) with second data acquired by a communication part (12B) from an RF tag (200), determines whether the first data is retained at an address (A1).

## Description

### BACKGROUND

### Technical Field

The disclosure relates to a retention determination device for data retained by a radio frequency (RF) tag.

### Related Art

A radio frequency (RF) tag communicates with a reader/writer device in a non-contact manner, and stores data received from the reader/writer device in a non-volatile memory of the RF tag. In recent years, information management using such an RF tag has been carried out in various fields.

Since the reader/writer device communicates with the RF tag in a non-contact manner, the communication may be interrupted during data rewriting. Patent Document 1 discloses a configuration in which data is backed up on the RF tag side in preparation for such a situation.

### Prior-Art Documents

### Patent Documents

Patent Document 1: Japanese Patent Laid-open No. 2001-22653

### SUMMARY

### [Problems to Be Solved]

However, in an RF tag, after a lapse of several seconds to tens of seconds from when data is written, the data stored may be lost due to a failure of the RF tag. In the configuration described in Patent Document 1, the backup data is stored on the RF tag side, and the above-mentioned failure of the RF tag cannot be dealt with. In addition, there is also a technique for confirming whether data has been normally written to an RF tag immediately after the data is written to the RF tag. However, in such a technique, since the confirmation is immediately after the writing, it is not possible to detect that the data is lost after several seconds to tens of seconds due to a failure of the RF tag.

One aspect of the disclosure has been made in view of the above problems, and an object thereof is to provide a retention determination device capable of determining an RF tag failure.

### [Means for Solving the Problems]

In order to solve the above problems, a retention determination device according to one aspect of the disclosure includes: a first acquisition part, acquiring first data written to a first address of an RF tag in a first position; a second acquisition part, acquiring second data read from the first address of the RF tag carried from the first position to a second position; and a determination part, determining whether the first data is retained at the first address by a first collation process of collating the first data acquired by the first acquisition part with the second data acquired by the second acquisition part.

According to the above configuration, since whether the first data written in the first position is normally retained is determined in the second position, it is possible to detect that the first data written in the first position P1 is lost during a period before reaching the second position (in other words, the fact that the first data is not retained) due to a failure of the RF tag. That is, it is possible to determine whether a failure has occurred in the RF tag.

In the retention determination device according to one aspect of the disclosure, in the first position, by a second collation process of collating the first data with third data read from the first address immediately after writing of the first data, whether the first data is normally written to the first address may be determined. The determination part may perform the first collation process after a time interval from the second collation process. According to the above configuration, since the first collation process is performed after a time interval from the second collation process, it is possible to determine whether a failure has occurred in the RF tag after a predetermined time has elapsed.

In the retention determination device according to one aspect of the disclosure, in the first position, the first reader/writer device may write and read data to and from the RF tag. The first acquisition part may acquire the first data from the first reader/writer device.

In the retention determination device according to one aspect of the disclosure, the retention determination device may be a second reader/writer device writing and reading data to and from the RF tag in the second position. According to the above configuration, it is possible to determine in the second reader/writer device whether a failure has occurred in the RF tag.

In the retention determination device according to one aspect of the disclosure, the retention determination device may be a controller controlling the first reader/writer device that writes and reads data to and from the RF tag in the first position and the second reader/writer device that writes and reads data to and from the RF tag in the second position. According to the above configuration, it is possible to determine in the controller whether a failure has occurred in the RF tag.

A retention determination system according to one aspect of the disclosure may be configured to include: the second reader/writer device as the retention determination device; a first reader/writer device writing and reading data to and from the RF tag in the first position; and a controller controlling the first reader/writer device and the second reader/writer device.

A retention determination system according to one aspect of the disclosure may be configured to include: the controller as the retention determination device; the first reader/writer device; and the second reader/writer device.

In the retention determination system according to one aspect of the disclosure, the second reader/writer device includes a notification part that notifies a user that the first data is not normally retained in the RF tag when the determination part determines that the first data is not normally retained in the RF tag. According to the above configuration, it is possible to notify the user that a failure has occurred in the RF tag.

In the retention determination system according to one aspect of the disclosure, the second reader/writer device may write the first data to a second address different from the first address of the RF tag when the determination part determines that the first data is not normally retained in the RF tag, and may notify the controller that the first data has been written to the second address.

In the retention determination system according to one aspect of the disclosure, the RF tag may store data writing time of multiple reader/writer devices. The second reader/writer device may read the data writing time from the RF tag, compare the data writing time with a current time and extract an address corresponding to a data writing time at which a predetermined time has elapsed, and read the extracted address and data of the extracted address from the RF tag. According to the above configuration, since only the data after a lapse of the predetermined time from when the data is written is subjected to determination of whether the data is normally written, it is possible to reduce a processing time required by a reader/writer device.

In the retention determination system according to one aspect of the disclosure, the RF tag may store data writing time of multiple reader/writer devices. The RF tag may acquire a current time from the second reader/writer device, compare the data writing time with the current time and extracts an address corresponding to a data writing time at which a predetermined time has elapsed, and transmit the extracted address and data of the extracted address to the second reader/writer device. According to the above configuration, since only the data after a lapse of the predetermined time from when the data is written is subjected to determination of whether the data is normally written, it is possible to reduce a processing time required by a reader/writer device.

In the retention determination system according to one aspect of the disclosure, the second reader/writer device may acquire the extracted address and the data of the extracted address from the multiple reader/writer devices or the controller.

A retention determination method according to one aspect of the disclosure includes: a first acquisition step of acquiring first data written to a first address of an RF tag in a first position; a second acquisition step of acquiring second data read from the first address of the RF tag carried from the first position to a second position; and a determination step of determining whether the first data is retained at the first address by a first collation process of collating the first data acquired in the first acquisition step with the second data acquired in the second acquisition step.

According to the above configuration, since whether the first data written in the first position is normally retained is determined in the second position, it is possible to detect that the first data written in the first position P1 is lost during a period before reaching the second position (in other words, the fact that the first data is not retained) due to a failure of the RF tag. That is, it is possible to determine whether a failure has occurred in the RF tag.

### [Effects]

According to one aspect of the disclosure, it is possible to determine an RF tag failure.

### BRIEF DESCRIPTION OF THE DRAWINGS

FIG. 1 is a block diagram showing a configuration including a retention determination system according to a first embodiment of the disclosure.
FIG. 2 is a flowchart showing an example of processing by the above-mentioned retention determination system.
FIG. 3 is a block diagram of a retention determination system as the present modification of the retention determination system according to the first embodiment.
FIG. 4 is a flowchart showing an example of processing by the above-mentioned retention determination system.
FIG. 5 is a schematic diagram showing a configuration of a retention determination system as the present modification of the retention determination system according to the first embodiment.
FIG. 6 is a schematic diagram showing a configuration of a retention determination system as the present modification of the retention determination system according to the first embodiment.
FIG. 7 is a schematic diagram showing a configuration of a retention determination system as the present modification of the retention determination system according to the first embodiment.

### DESCRIPTION OF THE EMBODIMENTS

An embodiment (hereinafter also written as "the present embodiment") according to one aspect of the disclosure is hereinafter described based on the drawings.

### § 1 Application Example

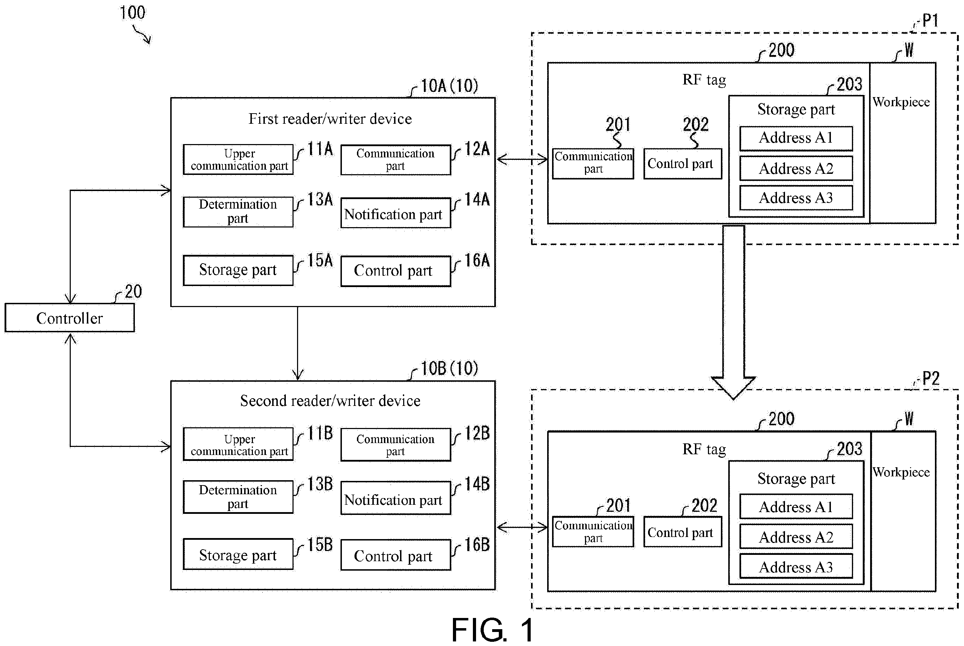

An example of a situation in which the disclosure is applied is described based on FIG. 1. FIG. 1 is a block diagram showing a configuration including a retention determination system 100 according to the present embodiment. The retention determination system 100 is used in, for example, a production line in a factory or the like, for managing an RF tag 200 attached to a workpiece W transported by a transport device.

As shown in FIG. 1, the retention determination system 100 includes a first reader/writer device 10A, a second reader/writer device 10B (retention determination device), and a controller 20. In the retention determination system 100, in a first position P1 on a transport path transporting the workpiece W, the first reader/writer device 10A writes and reads data to and from the RF tag 200. In the retention determination system 100, in a second position P2 being a working position subsequent to the first position P1 with respect to the workpiece W, the second reader/writer device 10B writes and reads data to and from the RF tag 200.

The second reader/writer device 10B acquires, from the first reader/writer device 10A, the data (first data) written by the first reader/writer device 10A to an address A1 of the RF tag 200 in the first position P1. The second reader/writer device 10B reads the data written to the address A1. The second reader/writer device 10B includes a determination part 13B that, by collating the first data acquired by an upper communication part 11B from the first reader/writer device 10A with second data acquired by a communication part 12B from the RF tag 200, determines whether the first data is retained at the address A1.

According to the above configuration, since whether the first data written in the first position P1 is normally retained is determined in the second position P2, it is possible to detect that the first data written in the first position P1 is not retained when the workpiece W reaches the second position P2 due to a failure of the RF tag 200. Since the collation is performed after a time interval from the writing of data, it is possible to detect a failure in which the data is lost after the data is normally written to the RF tag 200. That is, it is possible to determine whether a failure has occurred in the RF tag 200.

### §2 Configuration Example

FIG. 1 is a block diagram showing a configuration including the retention determination system 100 according to the present embodiment. As shown in FIG. 1, the retention determination system 100 includes multiple reader/writer devices 10 and the controller 20. In FIG. 1, for simplicity, only two reader/writer devices 10, that are, the first reader/writer device 10A and the second reader/writer device 10B, are shown as the multiple reader/writer devices 10. However, actually, a reader/writer device 10 is provided for a working position with respect to the workpiece W.

The RF tag 200 is assigned to the workpiece W and stores work content with respect the workpiece W. The RF tag 200 includes a communication part 201, a control part 202, and a storage part 203. The communication part 201 communicates with the reader/writer device 10 and performs data transmission and reception. The control part 202 receives data received from the reader/writer device 10 via the communication part 201, and writes the data to a predetermined address of the storage part 203.

The reader/writer device 10 writes and reads data to and from the RF tag 200 attached to the workpiece W. As shown in FIG. 1, in the retention determination system 100, in the first position P1 on the transport path transporting the workpiece W, the first reader/writer device 10A writes and reads data to and from the RF tag 200. Hereinafter, an address to which the first reader/writer device 10A writes data in the first position P1 is referred to as address A1 (first address).

In the second position P2 being the working position subsequent to the first position P1 with respect to the workpiece W, the second reader/writer device 10B writes and reads data to and from the RF tag 200. Hereinafter, an address to which the second reader/writer device 10B writes data in the second position P2 is referred to as address A2.

As shown in FIG. 1, the first reader/writer device 10A includes an upper communication part 11A, a communication part 12A, a determination part 13A, a notification part 14A, a storage part 15A and a control part 16A. Similarly, the second reader/writer device 10B includes the upper communication part 11B (first acquisition part), the communication part 12B (second acquisition part), a determination part 13B, a notification part 14B, a storage part 15B, and a control part 16B controlling each part of the second reader/writer device 10B. Since the configuration and function of each part of the first reader/writer device 10A are the same as those of each part of the second reader/writer device 10B, in the following description, the second reader/writer device 10B will be mainly described.

The upper communication part 11B acquires, from the first reader/writer device 10A, the data (hereinafter first data) written by the first reader/writer device 10A to the address A1 of the RF tag 200 in the first position P1. The upper communication part 11B transmits the data written by the second reader/writer device 10B to the address A2 of the RF tag 200 in the second position P2 and the number of the address to which the data is written to a reader/writer device 10 that writes and reads data to and from the RF tag 200 in a position subsequent to the second position P2 where an action takes place on the workpiece W. This reader/writer device 10 is not shown in FIG. 1.

Similarly, the upper communication part 11A transmits, to the second reader/writer device 10B, the first data (the data written by the first reader/writer device 10A to the RF tag 200 in the first position PI) and the number of the address to which the first data is written. The upper communication part 11B acquires the first data and the number of the address to which the first data is written that are transmitted from the upper communication part 11A of the first reader/writer device 10A.

The communication part 12B exchanges data with the RF tag 200 in the second position P2. Specifically, the communication part 12B transmits data to be written to the address A2 to the RF tag 200, and reads the data (specifically, the data written to the address A1 and the data written to the address A2) that has been written to the RF tag 200. The communication part 12B outputs the read data to the determination part 13B. In the following description, the data read from the address A1 by the communication part 12B will be referred to as second data.

The determination part 13B determines whether the data written by the first reader/writer device 10A to the address A1 of the RF tag 200 in the first position is retained at the address A1. Specifically, by performing a process (first collation process) of collating the first data acquired by the upper communication part 11B with the second data acquired by the communication part 12B, the determination part 13B determines whether the first data is retained at the address A1.

When the determination part 13B determines that the first data is not normally retained in the RF tag 200, the notification part 14B notifies a user that the first data is not normally retained in the RF tag 200. The notification part 14B may notify the user by voice, or by displaying the occurrence of an error on a display part such as a display.

The controller 20 controls each part of the retention determination system 100, such as the reader/writer devices 10 including the first reader/writer device 10A and the second reader/writer device 10B.

### §3 Operation Example

A retention determination method as an example of processing by the retention determination system 100 will be described.

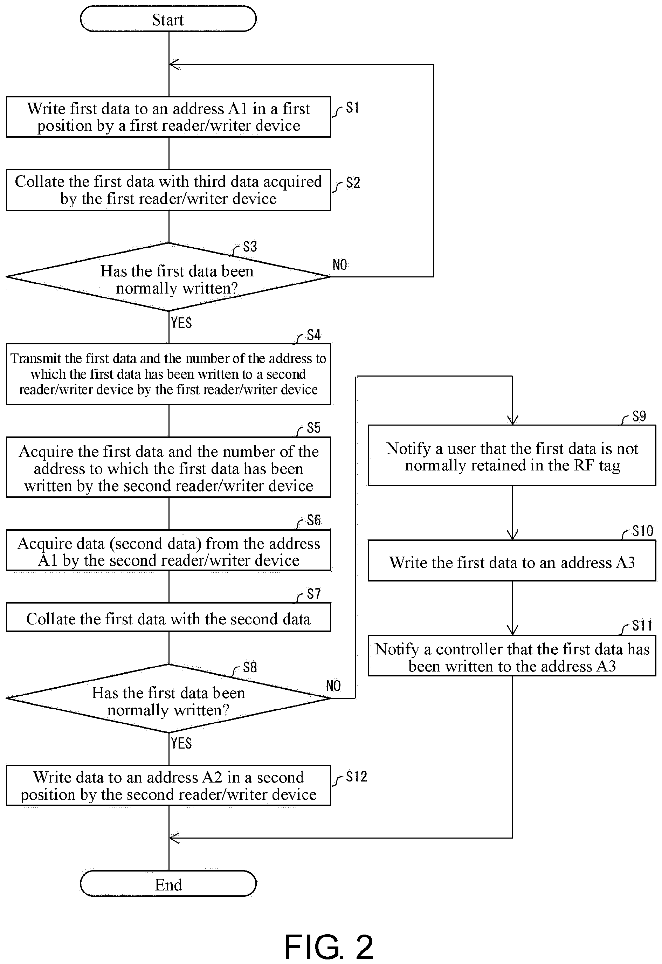

FIG. 2 is a flowchart showing an example of processing by the retention determination system 100. In the example shown in FIG. 2, a process for determining whether the first data written to the address A1 in the first position P1 is normally retained at the address A1 after a lapse of a predetermined time will be described.

As shown in FIG. 2, in the retention determination method in the present embodiment, first, by the first reader/writer device 10A, the first data being data about the work performed on the workpiece W is written to the address A1 in the first position P1 (step S1).

Next, the first reader/writer device 10A acquires data (hereinafter third data) written to the address A1 immediately after writing of the first data to the RF tag 200, and performs a process (second collation process) of collating the first data with the third data (step S2). Next, the first reader/writer device 10A determines whether the first data is normally written to the address A1 (step S3). If the first data is not normally written to the address A1 (NO in step S3), step S1 is performed again.

If the first data is normally written to the address A1 (YES in step S3), the upper communication part 11A of the first reader/writer device 10A transmits, to the second reader/writer device 10B, the first data and the number of the address to which the first data is written (step S4).

Next, the upper communication part 11B of the second reader/writer device 10B acquires the first data and the number of the address to which the first data is written that are transmitted from the first reader/writer device 10A (step S5, first acquisition step). The upper communication part 11B outputs the acquired first data and number of the address to which the first data is written to the determination part 13B.

Next, based on the number of the address acquired by the upper communication part 11B, the communication part 12B of the second reader/writer device 10B acquires data (second data) from the address A1 of the RF tag 200 (step S6, second acquisition step). The communication part 12B outputs the acquired second data to the determination part 13B.

Next, the determination part 13B collates the first data acquired by the upper communication part 11B with the second data acquired by the communication part 12B (step S7, determination step), and determines whether the first data is normally written to the address A1 (step S8, determination step). Moreover, since the determination step including step S7 and step S8 is performed after the RF tag 200 is carried to the second position P2, the determination step is performed after a time interval (for example, 10 seconds or more, or 20 seconds or more) from the second collation process.

If the determination part 13B determines that the first data is not normally written to the address A1 (NO in step S8), the control part 16B instructs the notification part 14B to notify the user that the first data is not normally retained in the RF tag 200 (step S9). Next, the second reader/writer device 10B writes the first data to an address A3 (second address) different from the address A1 of the RF tag 200 (step S10). Next, the second reader/writer device 10B notifies the controller 20 that the first data has been written to the address A3 (step S11).

In the present embodiment, the second reader/writer device 10B is configured to write the first data to the address A3 different from the address A1 in the case where the determination part 13B determines that the first data is not normally written to the address A1. However, the disclosure is not limited thereto. In one aspect of the disclosure, the second reader/writer device 10B may write the first data again to the address A1 in the case where the determination part 13B determines that the first data is not normally written to the address A1. In one aspect of the disclosure, the second reader/writer device 10B may be configured not to perform writing of the first data in the case where the determination part 13B determines that the first data is not normally written to the address A1.

On the other hand, if the determination part 13B determines that the first data is normally written to the address A1 (YES in step S8), the second reader/writer device 10B writes the data about the work performed on the workpiece W to the address A2 in the second position P2 (step S12). The following steps are the same as the procedure starting from step S2.

As described above, the second reader/writer device 10B in the present embodiment includes the determination part 13B that, by collating the first data acquired by the upper communication part 11B from the first reader/writer device 10A with the second data acquired by the communication part 12B from the RF tag 200, determines whether the first data is retained at the address A1.

According to the above configuration, since whether the first data written in the first position P1 is normally retained is determined in the second position P2, it is possible to detect that the first data written in the first position P1 is not retained when the workpiece W reaches the second position P2 due to a failure of the RF tag 200. That is, it is possible to determine whether a failure has occurred in the RF tag 200.

In one aspect of the disclosure, step S2 and step S3 may be omitted. In the present embodiment, if the determination part 13B determines that the first data is not normally written to the address A1, the user is notified by the notification part 14B that the first data is not normally retained in the RF tag 200. However, the disclosure is not limited thereto. In one aspect of the disclosure, if the determination part 13B determines that the first data is not normally written to the address A1, the second reader/writer device 10B may transmit the determination to the controller 20, and the controller 20 may notify the user that the first data is not normally retained in the RF tag 200.

### §4 Modifications

Other embodiments of the disclosure will be described below. For convenience of description, members having the same functions as those described in the above embodiment are denoted by the same reference numerals, and description thereof will not be repeated.

### <4.1>

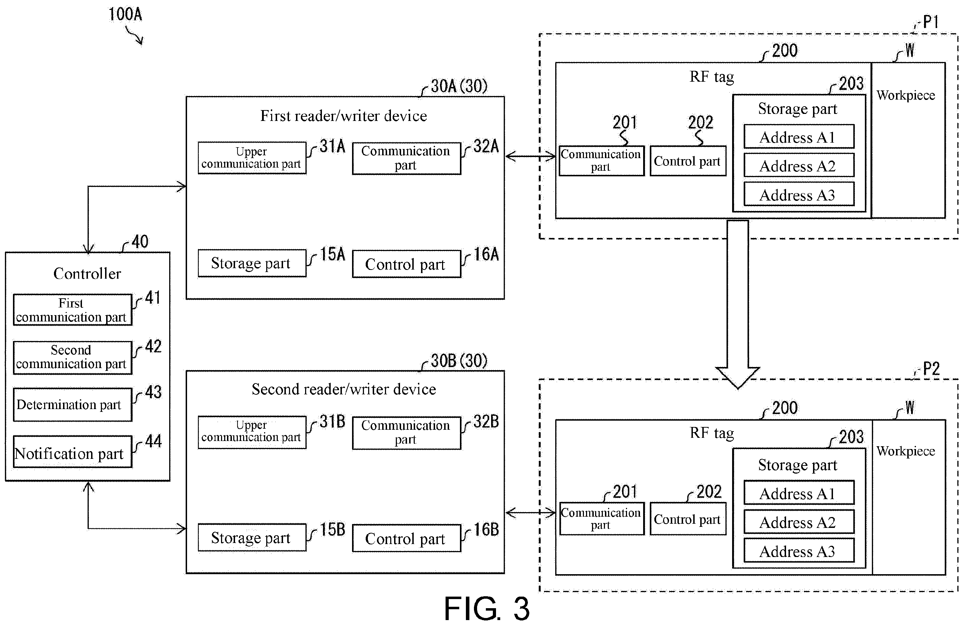

FIG. 3 is a block diagram of a retention determination system 100A in the present modification. As shown in FIG. 3, the retention determination system 100A includes multiple reader/writer devices 30 and a controller 40 (retention determination device). In FIG. 3, for simplicity, only two reader/writer devices 30, that are, a first reader/writer device 30A and a second reader/writer device 30B, are shown as the multiple reader/writer devices 30. However, actually, a reader/writer device 30 is provided for a working position with respect to the workpiece W.

The second reader/writer device 30B includes an upper communication part 31B and a communication part 32B in place of the upper communication part 11B and the communication part 12B. The second reader/writer device 30B is also different from the second reader/writer device 10B in the first embodiment in that the second reader/writer device 30B does not include the determination part 13B and the notification part 14B. Similarly, the first reader/writer device 30A includes an upper communication part 31A and a communication part 32A in place of the upper communication part 11A and the communication part 12A. The first reader/writer device 30A is also different from the first reader/writer device 10A in the first embodiment in that the first reader/writer device 30A does not include the determination part 13A and the notification part 14A.

Since the configuration and function of each part of the first reader/writer device 30A are the same as those of each part of the second reader/writer device 30B, in the following description, the second reader/writer device 30B will be mainly described.

The communication part 32B exchanges data with the RF tag 200 in the second position P2. Specifically, the communication part 32B transmits data to be written to the address A2 to the RF tag 200, and reads the data that has been written to the RF tag 200.

The upper communication part 31B exchanges data with the controller 40. Specifically, the upper communication part 31B acquires, from the controller 40, the data written by the first reader/writer device 30A to the address A1 of the RF tag 200 in the first position P1 and the number of the address to which the data is written. The upper communication part 31B transmits, to the controller 40, the data (second data) written by the communication part 32B to the address A2 of the RF tag 200. The upper communication part 31A of the first reader/writer device 30A transmits, to the controller 40, the data (first data) written by the communication part 32A to the address A1 of the RF tag 200.

The controller 40 controls each part of the retention determination system 100A, such as the reader/writer devices 30 including the first reader/writer device 30A and the second reader/writer device 30B. The controller 40 includes a first communication part 41 (first acquisition part), a second communication part 42 (second acquisition part), a determination part 43, and a notification part 44. The first communication part 41 acquires the first data and the number of the address to which the first data is written from the first reader/writer device 30A.

The second communication part 42 transmits, to the second reader/writer device 30B, the number of the address to which the first data is written that is acquired via the first communication part 41. The second communication part 42 acquires the second data from the second reader/writer device 30B.

The determination part 43 determines whether the data written by the first reader/writer device 30A to the address A1 of the RF tag 200 in the first position P1 is retained at the address A1. Specifically, by performing a process (first collation process) of collating the first data acquired by the first communication part 41 with the second data acquired by the second communication part 42, the determination part 43 determines whether the first data is retained at the address A1.

When the determination part 43 determines that the first data is not normally retained in the RF tag 200, the notification part 44 notifies the user that the first data is not normally retained in the RF tag 200. The notification part 44 may notify the user by voice, or by displaying the occurrence of an error on a display part such as a display.

Next, a retention determination method as an example of processing by the retention determination system 100A will be described.

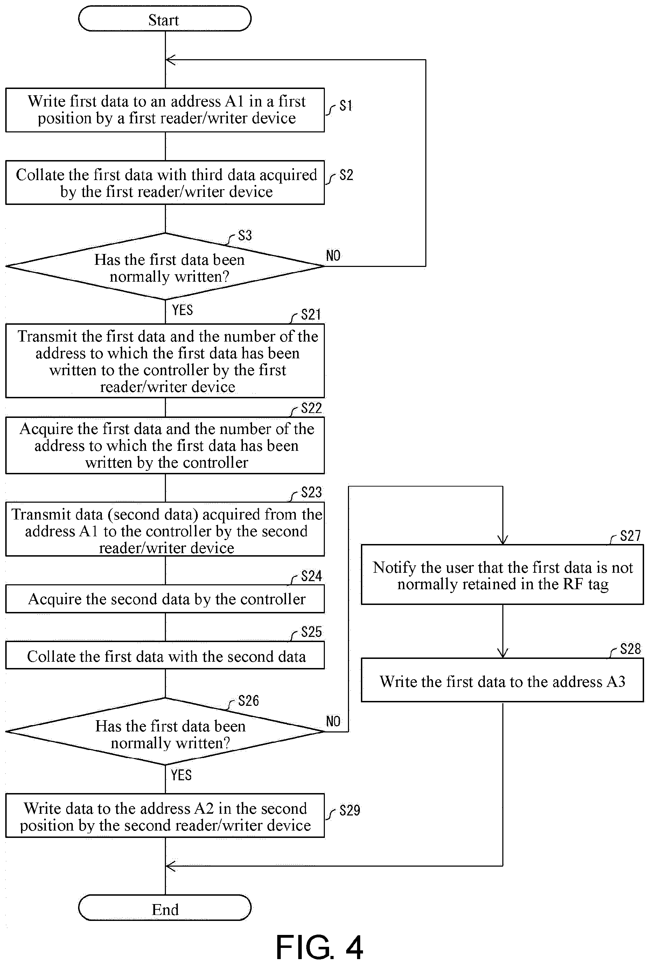

FIG. 4 is a flowchart showing an example of processing by the retention determination system 100A. As shown in FIG. 4, in the retention determination method in the present modification, first, steps S1 to S3 described in the first embodiment are performed.

If the first data is normally written to the address A1 (YES in step S3), the upper communication part 31A of the first reader/writer device 30A transmits, to the controller 40, the first data and the number of the address to which the first data is written (step S21).

Next, the first communication part 41 of the controller 40 acquires the first data and the number of the address to which the first data is written that are transmitted from the first reader/writer device 30A (step S22, first acquisition step). The first communication part 41 outputs the acquired first data to the determination part 43.

Next, based on the number of the address acquired from the controller 40 via the upper communication part 31B, the communication part 32B of the second reader/writer device 30B acquires data (second data) from the address A1 of the RF tag 200. Next, the upper communication part 31B transmits the second data acquired by the communication part 32B to the controller 40 (step S23).

Next, the second communication part 42 of the controller 40 acquires the second data transmitted from the second reader/writer device 30B (step S24, second acquisition step). The second communication part 42 outputs the acquired second data to the determination part 43.

Next, the determination part 43 collates the first data acquired by the first communication part 41 with the second data acquired by the second communication part 42 (step S25, determination step), and determines whether the first data is normally written to the address A1 (step S26, determination step).

If the determination part 43 determines that the first data is not normally written to the address A1 (NO in step S26), the user is notified by the notification part 44 that the first data is not normally retained in the RF tag 200 (step S27). Next, due to an instruction from the controller 40, the second reader/writer device 30B writes the first data to the address A3 (second address) different from the address A1 of the RF tag 200 (step S28).

On the other hand, if the determination part 43 determines that the first data is normally written to the address A1 (YES in step S26), the second reader/writer device 30B writes the data about the work performed on the workpiece W to the address A2 in the second position P2 (step S29).

In the retention determination system 100 in the first embodiment, the second reader/writer device 10B is configured to determine whether the first data written in the first position P1 is normally retained in the RF tag 200. In contrast, in the retention determination system 100A in the present modification, it is determined in the controller 40 whether the first data written in the first position P1 is normally retained in the RF tag 200.

By the above configuration, similarly to the first embodiment, it is possible to detect that the first data written in the first position P1 is not retained when the workpiece W reaches the second position P2 due to a failure of the RF tag 200. That is, it is possible to determine whether a failure has occurred in the RF tag 200.

### <4.2>

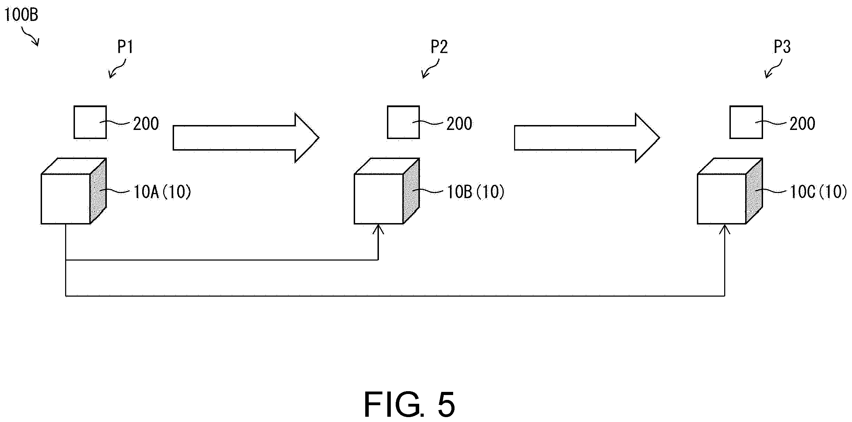

FIG. 5 is schematic diagram showing a configuration of a retention determination system 100B in the present modification. As shown in FIG. 5, in the retention determination system 100B, the first reader/writer device 10A, the second reader/writer device 10B, and a third reader/writer device 10C are provided in the first position P1, the second position P2, and a third position P3, respectively. The first reader/writer device 10A, the second reader/writer device 10B and the third reader/writer device 10C are the same as the reader/writer device 10 in the first embodiment. The second position P2 is the working position subsequent to the first position P1 with respect to the workpiece W on the transport path transporting the workpiece W. The third position P3 is the working position subsequent to the second position P2 with respect to the workpiece W on the transport path transporting the workpiece W.

In the retention determination system 100B, the first reader/writer device 10A transmits the data (first data) written to the address A1 of the RF tag 200 in the first position P1 to the second reader/writer device 10B and the third reader/writer device 10C. The second reader/writer device 10B transmits the data (hereinafter fourth data) written to the address A2 of the RF tag 200 in the second position P2 to the third reader/writer device 10C.

The third reader/writer device 10C reads the data written to the address A1 and the address A2 of the RF tag 200 from the RF tag 200 in the third position P3. The third reader/writer device 10C collates the data read from the RF tag 200 with the first data and the fourth data respectively acquired from the first reader/writer device 10A and the second reader/writer device 10B.

Accordingly, the third reader/writer device 10C is able to determine whether the data written by the first reader/writer device 10A to the address A1 of the RF tag 200 in the first position P1 is retained at the address A1, and to determine whether the data written by the second reader/writer device 10B to the address A2 of the RF tag 200 in the second position P2 is retained at the address A2.

As described above, in the retention determination system 100B, it is also determined in the third position P3 whether the data written by the first reader/writer device 10A to the address A1 of the RF tag 200 in the first position P1 is retained at the address A1. Accordingly, it is possible to detect that the first data written in the first position P1 is not retained when the workpiece W reaches the third position P3 from the second position P2 due to a failure of the RF tag 200.

In the present modification, the third reader/writer device 10C is configured to determine whether the data written by the first reader/writer device 10A to the address A1 and the data written by the second reader/writer device 10B to the address A2 are both normally written to the RF tag 200. However, the disclosure is not limited thereto.

In one aspect of the disclosure, for example, data writing time of multiple reader/writer devices 10 may be stored in the RF tag 200. The second reader/writer device 10B may read the data writing time from the RF tag 200, compare the data writing time with a current time and extract an address corresponding to a data writing time at which a predetermined time (for example, 10 minutes) has elapsed, read the extracted address and data of the extracted address from the RF tag 200, and determine whether the data is normally written. According to the above configuration, since only the data after a lapse of the predetermined time from when the data is written is subjected to determination of whether the data is normally written, it is possible to reduce a processing time required by the reader/writer device. In this case, the second reader/writer device 10B may acquire the data to be written to the extracted address from the reader/writer device 10 that wrote the data or may acquire the data via a controller.

In one aspect of the disclosure, for example, data writing time of multiple reader/writer devices 10 are stored in the RF tag 200. The RF tag 200 acquires the current time from the second reader/writer device 10B, compares the data writing time with the current time and extracts an address corresponding to a data writing time at which the predetermined time has elapsed, and transmits the extracted address and data of the extracted address to the second reader/writer device 10B. Then, by collating the data acquired from the RF tag 200 with the written data acquired from the reader/writer device 10 that wrote the data to the address where the data is written, the second reader/writer device 10B may determine whether the data written to the address is normal data.

### <4.3>

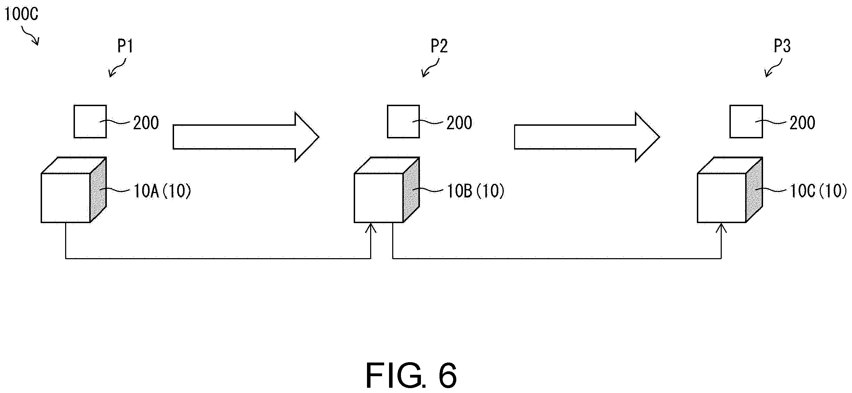

FIG. 6 is schematic diagram showing a configuration of a retention determination system 100C in the present modification. As shown in FIG. 6, in the retention determination system 100C, the first reader/writer device 10A transmits, to the second reader/writer device 10B, the data (first data) written to the address A1 of the RF tag 200 in the first position P1. The second reader/writer device 10B transmits, to the third reader/writer device 10C, the first data written by the first reader/writer device 10A to the address A1 of the RF tag 200 in the first position P1 and the data (fourth data) written to the address A2 of the RF tag 200 in the second position P2.

The third reader/writer device 10C reads the data written to the address A1 and the address A2 of the RF tag 200 from the RF tag 200 in the third position P3. The third reader/writer device 10C collates the data read from the RF tag 200 with the first data and the fourth data acquired from the second reader/writer device 10B.

Accordingly, the third reader/writer device 10C is able to determine whether the data written by the first reader/writer device 10A to the address A1 of the RF tag 200 in the first position P1 is retained at the address A1, and to determine whether the data written by the second reader/writer device 10B to the address A2 of the RF tag 200 in the second position P2 is retained at the address A2.

As described above, in the retention determination system 100C, it is also determined in the third position P3 whether the data written by the first reader/writer device 10A to the address A1 of the RF tag 200 in the first position P1 is retained at the address A1. Thus, it is possible to detect that the first data written in the first position P1 is not retained when the workpiece W reaches the third position P3 from the second position P2 due to a failure of the RF tag 200.

### <4.4>

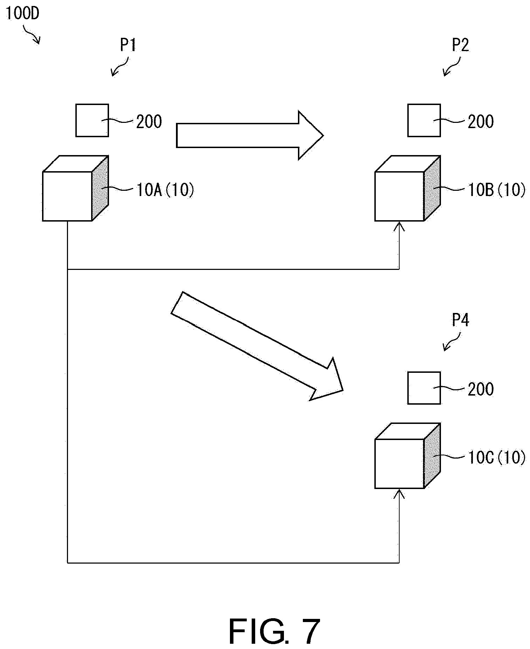

FIG. 7 is schematic diagram showing a configuration of a retention determination system 100D in the present modification. As shown in FIG. 7, in the present modification, a case is described where there are two candidates for the subsequent working position of the work with respect to the workpiece W in the first position P1, and these two candidates are the second position P2 and a fourth position P4.

In a retention determination system 100D, the first reader/writer device 10A, the second reader/writer device 10B, and the third reader/writer device 10C are provided in the first position P1, the second position P2, and the fourth position P4, respectively.

In the retention determination system 100D, the first reader/writer device 10A transmits the data (first data) written to the address A1 of the RF tag 200 in the first position P1 to the second reader/writer device 10B and the third reader/writer device 10C, respectively.

The second reader/writer device 10B reads the data written to the address A1 of the RF tag 200 from the RF tag 200 in the second position P2. The second reader/writer device 10B collates the data read from the RF tag 200 with the first data acquired from the first reader/writer device 10A. Accordingly, the second reader/writer device 10B determines whether the data written by the first reader/writer device 10A to the address A1 of the RF tag 200 in the first position P1 is retained at the address A1.

The third reader/writer device 10C reads the data written to the address A1 of the RF tag 200 from the RF tag 200 in the fourth position P4. The third reader/writer device 10C collates the data read from the RF tag 200 with the first data acquired from the first reader/writer device 10A. Accordingly, the third reader/writer device 10C determines whether the data written by the first reader/writer device 10A to the address A1 of the RF tag 200 in the first position P1 is retained at the address A1.

As described above, in the retention determination system 100D, in the case where there are two candidates, that are, the second position P2 and the fourth position P4, for the subsequent working position of the work with respect to the workpiece W in the first position P1, the second reader/writer device 10B and the third reader/writer device 10C respectively determine, in the second position P2 and the fourth position P4, whether the data written by the first reader/writer device 10A to the address A1 of the RF tag 200 in the first position P1 is retained at the address A1. Hence, in the case where there are two candidates, that are, the second position P2 and the fourth position P4, for the subsequent working position of the work with respect to the workpiece W in the first position P1, it is possible to detect that the first data written in the first position P1 is not retained when the workpiece W reaches the second position P2 or the fourth position P4 due to a failure of the RF tag 200.

In the present modification, a description is given of the case where there are two candidates, that are, the second position P2 and the fourth position P4, for the subsequent working position of the work with respect to the workpiece W in the first position P1. However, the disclosure is not limited thereto. In one aspect of the disclosure, the number of the subsequent working position of the work with respect to the workpiece W in the first position P1 may be three or more. In this case, the first reader/writer device 10A may transmit the first data to a reader/writer device corresponding to each of the three or more working positions.

### [Implementation Example by Software]

Control blocks (in particular, the upper communication part 11A, the upper communication part 11B, the first communication part 41, the communication part 12A, the communication part 12B, the second communication part 42, the determination part 13A, the determination part 13B and the determination part 43) of the first reader/writer device 10A, the second reader/writer device 10B and the controller 40 may be realized by a logic circuit (hardware) formed in an integrated circuit (IC chip) or the like, or may be realized by software.

In the latter case, the second reader/writer device 10B and the controller 40 include a computer executing instructions of a program being software that realizes each function. This computer includes, for example, at least one processor (control device), and includes at least one computer-readable recording medium storing the above program. In the computer, an object of the disclosure is achieved by the processor reading the program from the recording medium and executing the program. As the processor, a central processing unit (CPU), for example, can be used. As the recording medium, a "non-transitory tangible medium," for example, in addition to a read only memory (ROM), a tape, a disk, a card, a semiconductor memory, a programmable logic circuit or the like, can be used. In addition, a random access memory (RAM) or the like for developing the above program may further be included. In addition, the program may be supplied to the computer via an arbitrary transmission medium (such as communication network or broadcast wave) capable of transmitting the program. One aspect of the disclosure can also be implemented in the form of a data signal embedded in a carrier wave, the data signal being embodied by the above program by electronic transmission.

### [Description of Reference Numerals]

10A, 30A: first reader/writer device
10B, 30B: second reader/writer device (retention determination device)
11A, 11B: upper communication part (first acquisition part)
12A, 12B: communication part (second acquisition part)
13A, 13B, 43: determination part
14A, 14B, 44: notification part
40: controller (retention determination device)
41: first communication part (first acquisition part)
42: second communication part (second acquisition part)
100, 100A to 100D (retention determination system)
200: RF tag
P1: first position
P2: second position
A1: address (first address)
A3: address (second address)

## Claims

1. A retention determination device (10B, 30B, 40), **characterised by** comprising:
a first acquisition part (11A, 11B, 41), acquiring first data written to a first address (A1) of an RF tag (200) in a first position (P1);
a second acquisition part (12A, 12B, 42), acquiring second data read from the first address (A1) of the RF tag (200) carried from the first position (P1) to a second position (P2); and
a determination part (13A, 13B, 43), determining whether the first data is retained at the first address (A1) by a first collation process of collating the first data acquired by the first acquisition part (11A, 11B, 41) with the second data acquired by the second acquisition part (12A, 12B, 42).

2. The retention determination device (10B, 30B, 40) according to claim 1, wherein
in the first position (P1), by a second collation process of collating the first data with third data read from the first address (A1) immediately after writing of the first data, whether the first data is normally written to the first address (A1) is determined;
the determination part (13A, 13B, 43) performs the first collation process after a time interval from the second collation process.

3. The retention determination device (10B, 30B, 40) according to claim 1 or 2, wherein
a first reader/writer device (10A, 30A) writes and reads data to and from the RF tag (200) in the first position (P1);
the first acquisition part (11A, 11B, 41) acquires the first data from the first reader/writer device (10A, 30A).

4. The retention determination device (10B, 30B, 40) according to any one of claims 1 to 3, wherein
the retention determination device (10B, 30B, 40) is a second reader/writer device (10B, 30B) writing and reading data to and from the RF tag (200) in the second position (P2).

5. The retention determination device (10B, 30B, 40) according to any one of claims 1 to 3, wherein
the retention determination device (10B, 30B, 40) is a controller (40) controlling the first reader/writer device (10A, 30A) that writes and reads data to and from the RF tag (200) in the first position (P1) and the second reader/writer device (10B, 30B) that writes and reads data to and from the RF tag (200) in the second position (P2).

6. A retention determination system (100, 100A, 100B, 100C, 100D), **characterised by** comprising:
the second reader/writer device (10B, 30B) as the retention determination device (10B, 30B, 40) according to claim 4;
a first reader/writer device (10A, 30A), writing and reading data to and from the RF tag (200) in the first position (P1); and
a controller (40), controlling the first reader/writer device (10A, 30A) and the second reader/writer device (10B, 30B).

7. A retention determination system (100, 100A, 100B, 100C, 100D), **characterised by** comprising:
the controller (40) as the retention determination device (10B, 30B, 40) according to claim 5;
the first reader/writer device (10A, 30A); and
the second reader/writer device (10B, 30B).

8. The retention determination system (100, 100A, 100B, 100C, 100D) according to claim 6 or 7, wherein
the second reader/writer device (10B, 30B) comprises a notification part (14A, 14B, 44) that notifies a user that the first data is not normally retained in the RF tag (200) when the determination part (13A, 13B, 43) determines that the first data is not normally retained in the RF tag (200).

9. The retention determination system (100, 100A, 100B, 100C, 100D) according to any one of claims 6 to 8, wherein
the second reader/writer device (10B, 30B) is configured to:
write the first data to a second address (A3) different from the first address (A1) of the RF tag (200) when the determination part (13A, 13B, 43) determines that the first data is not normally retained in the RF tag (200), and
notify the controller (40) that the first data has been written to the second address (A3).

10. The retention determination system (100, 100A, 100B, 100C, 100D) according to any one of claims 6 to 9, wherein
the RF tag (200) stores data writing time of a plurality of reader/writer devices (10, 10A, 10B, 30, 30A, 30B), wherein
the second reader/writer device (10B, 30B) reads the data writing time from the RF tag (200), compares the data writing time with a current time and extracts an address corresponding to a data writing time at which a predetermined time has elapsed, and reads the extracted address and data of the extracted address from the RF tag (200).

11. The retention determination system (100, 100A, 100B, 100C, 100D) according to any one of claims 6 to 9, wherein
the RF tag (200) stores data writing time of a plurality of reader/writer devices (10, 10A, 10B, 30, 30A, 30B), wherein
the RF tag (200) acquires a current time from the second reader/writer device (10B, 30B), compares the data writing time with the current time and extracts an address corresponding to a data writing time at which a predetermined time has elapsed, and transmits the extracted address and data of the extracted address to the second reader/writer device (10B, 30B).

12. The retention determination system (100, 100A, 100B, 100C, 100D) according to claim 10 or 11, wherein
the second reader/writer device (10B, 30B) acquires the extracted address and the data of the extracted address from the plurality of reader/writer devices (10, 10A, 10B, 30, 30A, 30B) or the controller (40).

13. A retention determination method, **characterised by** comprising:
a first acquisition step of acquiring first data written to a first address (A1) of an RF tag (200) in a first position (P1);
a second acquisition step of acquiring second data read from the first address (A1) of the RF tag (200) carried from the first position (P1) to a second position (P2); and
a determination step of determining whether the first data is retained at the first address (A1) by a first collation process of collating the first data acquired in the first acquisition step with the second data acquired in the second acquisition step.
